# EUROPÄISCHE PATENTSCHRIFT

(11) **EP 1 624 989 B1**
(45) Veröffentlichungstag und Bekanntmachung des Hinweises auf die Patenterteilung: **16.08.2006**
(21) Anmeldenummer: 04733317.4
(22) Anmeldetag: 17.05.2004
(51) Int. Cl.: B23C 3/12, B27C 5/00

(54) **FRÄSAGGREGAT**
MILLING UNIT
UNITE DE FRAISAGE

(30) Priorität: 22.05.2003 DE 20308037 U
(43) Veröffentlichungstag der Anmeldung: 15.02.2006
(73) Patentinhaber: OTT Verwaltungs GmbH, 4650 Lambach (AT)
(72) Erfinder: PITTRICH, Gerhard, A-4702 Wallen an der Trattnach (AT); KASER, Hans, A-4671 Aichkirchen (AT)
(74) Vertreter: Hano, Christian
(86) Internationale Anmeldenummer: PCT/EP2004/005298
(87) Internationale Veröffentlichungsnummer: WO 2004/103621

(56) Entgegenhaltungen:
- EP-A- 1 302 287

## Beschreibung

Die Erfindung betrifft ein Fräsaggregat zur Bearbeitung von Kanten an Stirnseiten von plattenförmigen Werkstücken mit einer Fräsmotoreinrichtung, an deren dem Werkstück zugewandten Stirnende ein von der Fräsmotoreinrichtung angetriebenes Fräswerkzeug vorgesehen ist, und einer Fräskopfaufnahmeeinrichtung, in der die Fräsmotoreinrichtung durch einen ersten Verstellantrieb senkrecht zur Kante des Werkstücks in einer ersten Verstellrichtung verschiebbar gelagert ist. Ein Fräsaggregat gemäß dem Oberbegriff von Anspruch 1 ist aus der EP 1 302 287 bekannt.

Es sind Kopierfräsaggregate für Kantenleimmaschinen bekannt, die zum stirnseitigen Verrunden von gekappten Kanten verwendet werden. Diese Kopierfräsaggregate sind in der Regel mit Radiusmesserköpfen ausgestattet, die normalerweise einen vorderen und einen hinteren Bereich von durchlaufenden Werkstücken bearbeiten. Die Bearbeitung wird durch einen an einem Fräsmotor befestigten Fräser bewerkstelligt, der über geeignete Tasteinrichtungen eine saubere Kopierung am Werkstück erreicht. Diese Tasteinrichtungen sind zur Anpassung an unterschiedliche Aufgabenstellungen oft mit einer manuellen Feineinstellmöglichkeit versehen. Die Kopierfähigkeit wird durch eine geeignete Kinematik mit normalerweise pneumatischen Antrieben bewerkstelligt, die den Fräser bzw. die Tasteinrichtung präzise und mit möglichst geringem Druck um das Werkstück führen, um die Kanten zu schonen. Der obere und der untere Längsradius an dem Werkstück muss im Gegensatz zu den Stirnseiten einen leichten Überstand aufweisen, damit für eine anschließende Finishbearbeitung noch ausreichend Material vorhanden ist. Dies wird durch eine entsprechende Feineinstellung von Tastrollen erreicht. Die Feineinstellung für die Stirnseiten ist gesondert abzustimmen und aufgrund der wechselseitigen Beeinflussung der gegenüberliegenden Stirnseite ist es schwierig.

Um eine optimale Feineinstellung und hohe Durchlaufgeschwindigkeiten zu erreichen, sind bei bekannten Kopierfräsaggregaten vier Antriebsspindeln erforderlich.

Diese Kopierfräsaggregate sind somit konstruktiv sehr aufwendig. Darüber hinaus ist der Betreuungsaufwand und der Platzbedarf sehr hoch.

Der Erfindung liegt die Aufgabe zugrunde, mit konstruktiv einfachen Mitteln ein universell einsetzbares Fräsaggregat mit geringer Baugröße zu schaffen, mit dem hohe Durchlaufgeschwindigkeiten und ein hoher Automatisierungsgrad möglich sind.

Diese Aufgabe wird erfindungsgemäß durch ein Fräsaggregat gemäß Anspruch 1 gelöst.

Bei dem erfindungsgemäßen Fräsaggregat wird eine Feineinstellung in einer ersten senkrecht zur Kante des Werkstückes verlaufenden Verstellrichtung und in einer zweiten Verstellrichtung parallel zur Kante des Werkstücks mit geringer Baugröße und konstruktiv wenig Aufwand ermöglicht. Die Fräsmotoreinrichtung ist in der Fräskopfaufnahmeeinrichtung schwimmend gelagert, so dass sich eine Verstellung in der ersten Verstellrichtung und eine Verstellung in der zweiten Verstellrichtung gegenseitig nicht beeinflussen oder behindern. Gleichzeitig sind mit dem Fräsaggregat trotz konstruktiv wenig Aufwand hohe Durchlaufgeschwindigkeiten möglich.

Vorzugsweise ist die Gegendruckleiste durch gefederte Druckelemente vorgespannt, deren eines Ende an einer äußeren, in der ersten Verstellrichtung verlaufenden Seitenfläche der Gegendruckleiste anliegt und deren anderes Ende an der Fräskopfauf nahmeeinrichtung befestigt ist. Hierdurch wird eine stabile Aufnahme der Führungsleiste und des daran angebrachten Fräsmotors geschaffen, wobei gleichzeitig eine präzise Bewegung der Führungsleiste in der ersten Verstellrichtung gewährleistet wird.

Zur Verstellung der Fräsmotoreinrichtung in der ersten Verstellrichtung ist an der Führungsleiste bevorzugt eine Gewindemutter mit einem Innengewinde vorgesehen, in das ein mit dem ersten Außengewinde versehenes Ende einer Verstellspindel eingreift, die außerdem ein zweites Außengewinde aufweist, das mit einem Innengewinde einer Spindelmutter in Eingriff steht, welche an der Fräskopfaufnahmeeinrichtung vorgesehen ist. Die Verstellspindel wird von dem Verstellantrieb angetrieben.

Bei einer bevorzugten Ausführungsform ist die Fräskopfaufnahmeeinrichtung auf zwei horizontal im Abstand zueinander angeordneten Achsen verschiebbar gelagert. Zwei erste parallele Lenker sind mit einem Ende jeweils an einer der Achsen angelenkt und mit dem anderen Ende an einem ersten Lagerelement angelenkt. Außerdem sind zwei zweite parallele Lenker vorgesehen, die im Abstand zueinander mit einem Ende an dem ersten Lagerelement und mit dem anderen Ende an einem zweiten gestellfesten Lagerelement angelenkt sind, das bezüglich des ersten Lagerelements von der Fräskopfaufnahmeeinrichtung abgewandt angeordnet ist. Aufgrund dieser Anordnung kann das Fräsaggregat nur parallel zur zu bearbeiteten Stirnseite des Werkstücks bewegt werden. Deswegen ist für die verschiedenen Verstellungen der Fräskopfaufnahmeeinrichtung und des Fräsmotors eine klare Zuordnung des Fräswerkzeugs zur Kontur des Werkstücks gegeben.

Das erfindungsgemäße Fräsaggregat weist zweckmäßigerweise eine Tasteinrichtung mit Tastrolle und Tastring auf. Die Tasteinrichtung ist an einer Aufnahmeplatte angebracht, die an der dem Werkstück zugewandten Seite der Fräskopfaufnahmeeinrichtung angeordnet ist. Für eine genaue Einstellung der Tasteinrichtung ist die Aufnahmeplatte parallel zur Stirnseite des Werkstücks relativ zu der Fräskopfaufnahmeeinrichtung einstellbar.

Für eine schnelle Zustellung der Fräskopfeinrichtung zu dem Werkstück und weg von diesem sind die Zustellantriebe mit dem von dem Werkstück abgewendeten Ende der beiden Achsen verbunden. Sie weisen einen in der ersten Verstellrichtung hin und her bewegbaren Kolben auf, der sich durch die Achse erstreckt und mit der Fräskopfaufnahmeeinrichtung oder mit der Aufnahmeplatte verbunden ist. Zur Anpassung auf die Kantenstärke ist bevorzugt ein Anschlagelement auf den beiden Achsen verschiebbar angeordnet, das bezüglich der Fräskopfaufnahmeeinrichtung in der ersten Verstellrichtung durch einen Einstellantrieb einstellbar ist.

Ein Ausführungsbeispiel der Erfindung wird nachstehend anhand von Zeichnungen näher erläutert. Es zeigen:
- Fig. 1: eine Stirnansicht einer Längsseite eines plattenförmigen Werkstücks, auf die eine Kante aufgeleimt ist,
- Fig. 2: eine perspektivische Darstellung eines Fräsaggregats,
- Fig. 3: eine Seitenansicht des Fräsaggregats von Fig. 2,
- Fig. 4: eine hintere Stirnansicht des Fräsaggregats von Fig. 2 wobei Verstell- bzw. Zustellantriebe weggelassen sind,
- Fig. 5: eine vergrößerte Teilansicht von Fig. 4,
- Fig. 6: den Schnitt V-V von Fig. 4.

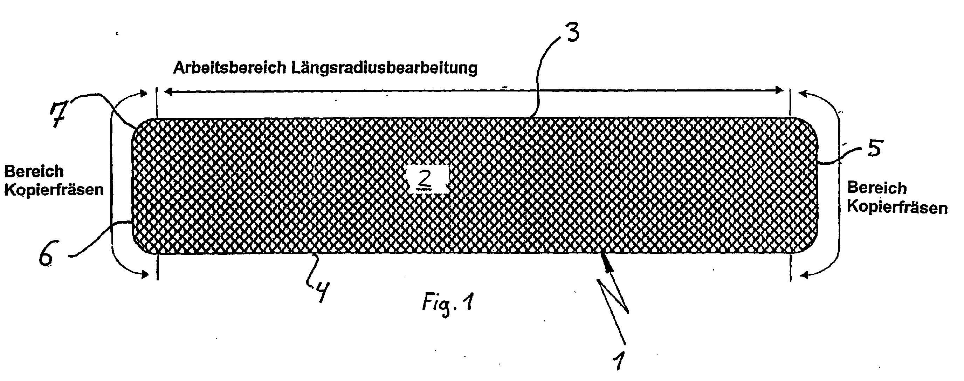

Fig. 1 zeigt die Längsstirnseite eines plattenförmigen Werkstücks 1 aus Holz, z.B. einer Spanplatte, auf die eine Kante 2 aufgeleimt ist. Die Kante 2 muss nach dem Aufleimen an den Längsrändern 3, 4 durch Längsradiusbearbeitung und an den Seitenrändern durch Kopierfräsen bearbeitet werden, wobei im Übergangsbereich zwischen Längs- und Seitenrändern Verrundungen 7 vorgesehen werden.

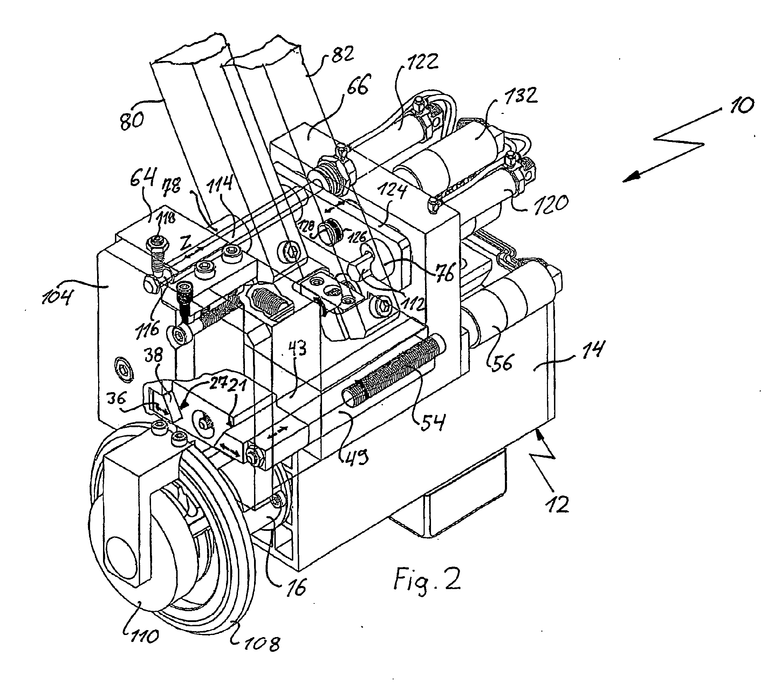

Das in den Fig. 2 bis 6 gezeigte Fräsaggregat 10 weist zur Durchführung dieser Bearbeitung eine Fräsmotoreinrichtung 12 mit einem länglichen quaderförmigen Motorgehäuse 14 auf, in dem ein Antriebsmotor vorgesehen ist. Aus dem Gehäuse 14 steht eine Antriebswelle 16 vor, die senkrecht zu einer Ebene angeordnet ist, in der die Längsstirnseite des plattenförmigen Werkstücks 1 aus Holz liegt, auf die die Kante 2 aufgeleimt ist. Am äußersten Ende der Antriebswelle 16 ist ein Radiusmesserkopf 18 zur Bearbeitung der Ränder der Kante 2 befestigt.

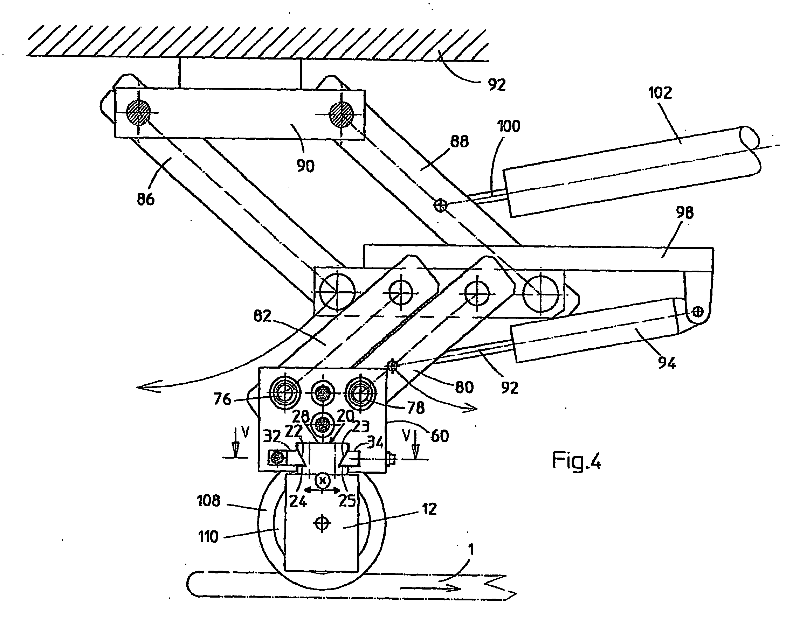

Auf der Oberseite des Motorgehäuses 14 ist eine sich in Längsrichtung (Z-Richtung) des Motorgehäuses 14 erstreckende Führungsleiste 20 angebracht. Wie es in den Fig. 2 und 4 zu erkennen ist, hat die Führungsleiste 20 einen schwalbenschwanzführungsähnlichen Querschnitt. Der Querschnitt ist insgesamt rechteckig, wobei in den beiden gegenüberliegenden Längsseiten der Führungsleiste 20 Konusaussparungen 21 bzw. 27 ausgebildet sind, die jeweils eine horizontale Bodenfläche 24 bzw. 25 aufweisen, von deren inneren Ende sich eine Seitenfläche 22 bzw. 23 in geneigtem Winkel schräg nach oben und nach außen erstreckt.

Die Führungsleiste 20 ist in einer nach unten offenen Ausnehmung 28 einer Fräskopfaufnahmeeinrichtung 30 aufgenommen, deren Form so gestaltet ist, dass sich die Führungsleiste 20 entlang einer an ihr ausgebildeten oberen Gleitfläche 19 an einer Gegengleitfläche 29 der Ausnehmung 28 so bewegen kann, dass eine nötige Verstellmöglichkeit (z.B. 0,3mm) in X-Richtung, d.h. parallel zur aufgeleimten Kante 2, sowie eine größere Bewegungsmöglichkeit (z.B. 3mm) in Z-Richtung, d.h. senkrecht zur Kante 2 ermöglicht wird. Seitlich der Aussparungen 21, 27 sind in der Fräskopfaufnahmeeinrichtung 30 zu den Aussparungen hin offene Nuten 32, 34 ausgebildet.

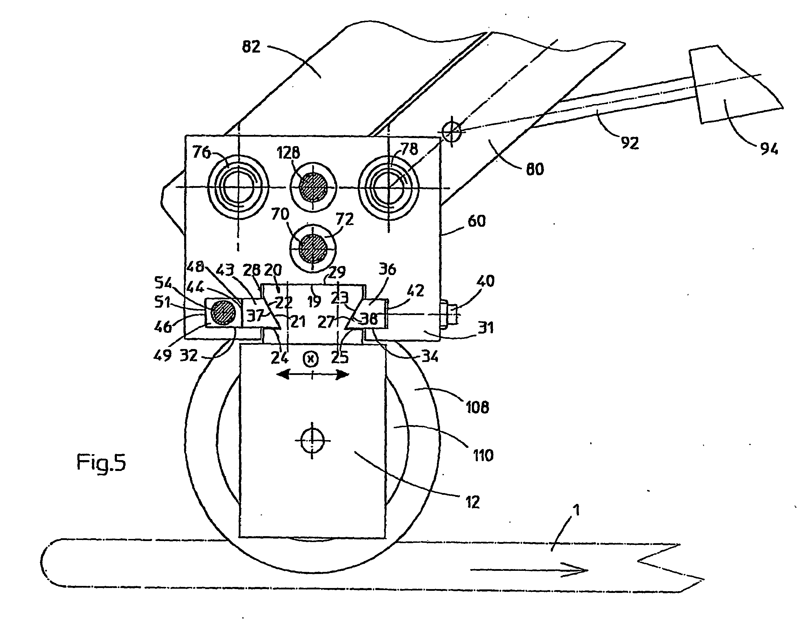

In der in Fig. 4 und 5 rechten Nut 34 ist eine Gegendruckleiste 36 parallel zur Längsstirnseite des Werkstücks 1 (in X-Richtung) verschiebbar angeordnet, die eine Gleitfläche 38 aufweist, die an der Seitenfläche 23 der Führungsleiste 20 anliegt.

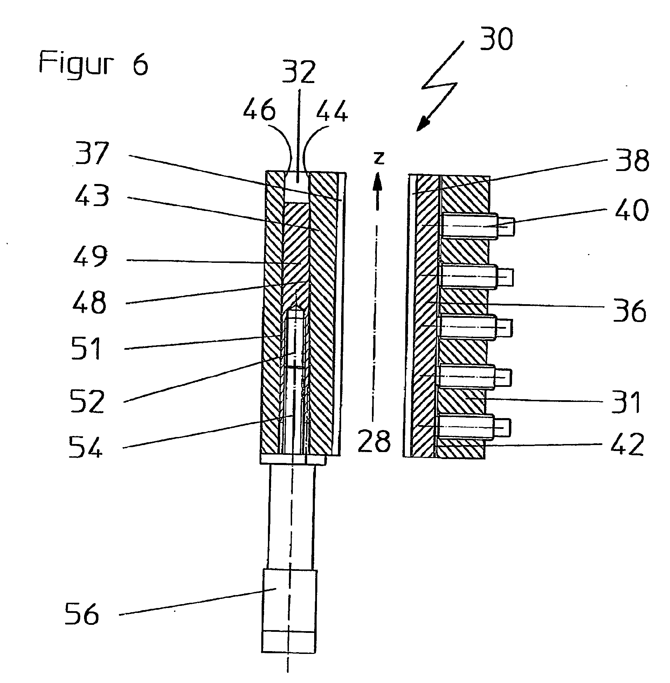

Fig. 6 zeigt den Schnitt V-V von Fig. 4, wobei die Führungsleiste 20 aus Gründen der Übersichtlichkeit weggelassen ist. In der Wandung 31 der Fräskopfaufnahmeeinrichtung 30 sind mehrere Druckelemente 40 senkrecht zur Längsrichtung der Führungsleiste 20 bzw. zur Längsverstellrichtung (Z-Richtung) der Führungsleiste 20 befestigt, die mit ihrem einen Stirnende auf die äußere Seitenfläche 42 der Gegendruckleiste 36 eine Vorspannkraft ausüben.

In die in Fig. 4 linke Aussparung 21 der Führungsleiste 20 greift eine in der Nut 32 horizontal verschiebbar geführte Seitendruckleiste 43 ein, die eine innere Gleitfläche 37 aufweist, die an der Seitenfläche 22 der Führungsleiste 20 anliegt. Die äußere Gleitfläche 44 der Seitendruckleiste 43 verläuft leicht schräg zu der Verstellrichtung Z, wobei sich die Dicke der Seitendruckleiste 43 zum hinteren Ende der Fräskopfaufnahmeeinrichtung 30 hin verringert. Die Steigung beträgt ungefähr 1:10. Zwischen der äußeren Gleitfläche 44 und der Stirnfläche 46 der Nut 32 ist ein Schieber 49 angeordnet, der mit seiner inneren Gleitfläche 48 an der äußeren Gleitfläche 44 der Seitendruckleiste 43 und mit seiner äußeren Gleitfläche 51 an der in Z-Richtung verlaufenden Stirnfläche 46 der Nut 32 anliegt. Die horizontale Breite des Schiebers 49 verringert sich somit nach vorne mit der gleichen Steigung mit der sich die Dicke der Seitendruckleiste 43 erhöht.

In dem hinteren Ende des Schiebers 49 ist eine in Z-Richtung verlaufende Gewindeöffnung 52 vorgesehen, in die eine Verstellspindel 54 eingreift, die von einem Antriebsmotor 56 angetrieben wird, der an der hinteren Stirnseite der Fräskopfaufnahmeeinrichtung 30 befestigt ist.

In der in den Fig. 4 und 5 gezeigten Mittelstellung der Führungsleiste 20 ist zu beiden Seiten der Führungsleiste 20 ein Spiel von ca. 0,5mm zwischen Ausnehmung 28 und Führungsleiste 20 vorhanden. Zwischen der äußere Seitenfläche 42 der Gegendruckleiste 36 und der Wandung 31 existiert dabei ein Spiel von ebenfalls ca. 0,5mm.

Durch den durch die Druckelemente 40 über die Gegendruckleiste 36 seitlich ausgeübten Druck wird die Führungsleiste 20 aufgrund der schrägen Seitenfläche 23 sowohl nach oben auf die Gegengleitfläche 29 der Ausnehmung 28 der Fräskopfaufnahmeeinrichtung 30 als auch auf die gegenüberliegende Gleitfläche 37 der Seitendruckleiste 43 gespannt.

Bei einer Bewegung des Schiebers 49 mittels der Verstellspindel 54 nach vorne wird die Seitendruckleiste 43 und somit auch die Führungsleiste 20 mit der daran befestigten Fräsmotoreinrichtung 12 und die Gegendruckleiste 36 gegen die Vorspannkraft der Druckfedern 40 in X-Richtung nach links bewegt. Bei einer Bewegung des Schiebers 49 nach hinten werden die Gegendruckleiste 36, die Führungsleiste 20 und die Seitendruckleiste 43 durch die Federkraft der Druckelemente 40 in X-Richtung nach rechts bewegt.

Durch die bei der Bewegung in X-Richtung auf die Seitenflächen 22 bzw. 23 der Führungsleiste ausgeübte Kraft wird die Führungsleiste 20 auf die Gleitflächen 19 und 29 gespannt und trotzdem in Z-Richtung frei bewegbar gehalten, so dass eine präzise Achsbewegung in Z-Richtung ebenfalls über die als Gleitflächen ausgebildeten Seitenflächen 22, 23 ohne Beeinflussung oder Behinderung möglich ist. Zur Aufnahme der Krafteinleitung sind die seitlich der Aussparungen 21, 27 offene Nuten 32, 34 in der Fräskopfaufnahmeeinrichtung 30 ausgebildet.

Außerdem ist durch die konstruktive Ausführung der Verstellung mit Spindelantrieb 70 und dem sich mit einer Steigung von 1:10 verjüngenden Schieber 49 eine extrem feinfühlige Untersetzung möglich. Verstellschritte in X-Richtung von 0,005mm können so einfach über eine Steuerung realisiert werden.

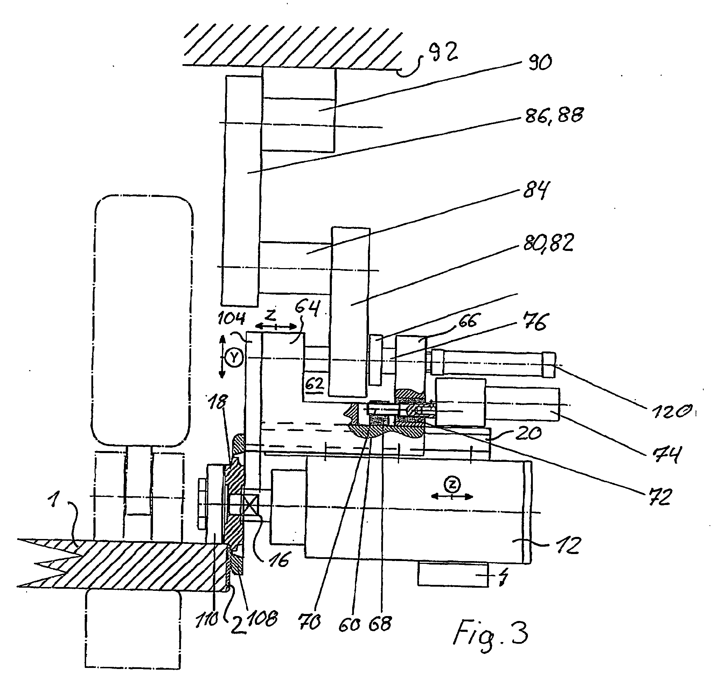

Wie es in Fig. 3 zu erkennen ist, weist die Fräskopfaufnahmeeinrichtung 30 einen insgesamt quaderförmigen Aufnahmekörper 60 auf, in dessen mittleren Bereich eine nach oben offene Aussparung 62 vorgesehen ist, die durch einen vorderen Schenkel 64 und einen hinteren Schenkel 66 begrenzt wird. Zur Feinverstellung der Fräsmotoreinrichtung 12 in Z-Richtung ist auf der Oberseite der Führungsleiste 20 ein Gewindemutterblock 68 im Bereich der Aussparung 62 angeordnet, in dessen Gewindemutter ein vorderes Gewinde einer Verstellspindel 70 eingreift. Ein zweites hinteres Gewinde der Verstellspindel greift in ein Gewinde einer Spindelmutter 72 ein, die in dem hinteren Schenkel 66 angebracht ist. Die Verstellspindel 70 geht durch den hinteren Schenkel 66 hindurch und wird an ihrem hinteren Ende durch einen Spindelantrieb 74 angetrieben, der an der Verstellspindel 70 befestigt und über die Spindelmutter 72 gegen Verdrehung gesichert ist. Durch die entstehende und wirkende Differenz der beiden Gewinde wird eine sehr feinfühlige Verstellung in Z-Richtung erreicht.

Der Aufnahmekörper 60 ist in seinem oberen Bereich in einer horizontalen Ebene auf parallel zueinander im Abstand angeordneten Achsen 76, 78 in Z-Richtung verschiebbar gelagert. Zwei erste parallele Lenker 80, 82 sind mit ihrem einen Ende auf der Achse 76 bzw. 78 fest angebracht. Mit ihrem anderen Ende sind die Lenker 80, 82 an einer Lagerplatte 84 schwenkbar angelenkt. Auf der anderen Seite der Lagerplatte 84 sind zwei zweite parallele Lenker 86, 88 mit ihrem einen Ende angelenkt, deren anderes Ende an einer weiteren Lagerplatte 90 angelenkt ist. Die Lagerplatte 90 ist an einem Maschinengestell 92 befestigt.

Im mittleren Bereich des in Fig. 4 rechten ersten Lenkers 80 ist ein Kolben 92 einer pneumatischen Kolbeneinrichtung 94 angelenkt, die ihrerseits an einem Träger 98 angelenkt ist, der an der ersten Lagerplatte 84 befestigt ist. Auf gleiche Weise ist im mittleren Bereich des in Fig. 4 rechten zweiten Lenkers 88 ein Kolben 100 einer pneumatischen Kolbeneinrichtung 102 angelenkt, wobei die Kolbeneinrichtung 102 mit dem Maschinengestell 92 gelenkig verbunden ist.

An der Stirnseite des Aufnahmekörpers 60 ist eine Aufnahmeplatte 104 so befestigt, dass ihre Höhe in Y-Richtung bezüglich des Aufnahmekörpers 60 durch eine von oben zugänglich Einstellschraube 106 längs einer Führung eingestellt werden kann.

An der vorderen Stirnseite der Aufnahmeplatte 104 sind ein den Messerkopf 18 umgebender Tastring 108 und eine Tastrolle 110 so angebracht, dass die Tastrolle 110 bei Bearbeitung der Kante auf dem Werkstück 1 aufliegt und der Tastring 108 an der Längsstirnseite des mit der Kante 2 versehenen Werkstücks 1 anliegt, wie es in Fig. 3 gezeigt ist.

Die Höhe der Aufnahmeplatte 104 in Y-Richtung wird so eingestellt, dass der Messerkopf 18 über dem jeweiligen Längsrand des Werkstücks 1 einen minimalen Überstand von ca. 0,05 bis 0,1 mm belässt, der anschließend durch ein folgendes Ziehklingenaggregat beseitigt wird, um eine saubere und rattermarkenfreie Fläche zu schaffen.

Wie es in Fig. 2 zu erkennen ist, geht durch die Achsen 76, 78 jeweils eine Kolbenstange 112, 114 hindurch, die jeweils mit ihrem vorderen Ende an die Aufnahmeplatte 104 in vorderer bzw. aktivierter Stellung anstoßen und so das gesamte Fräsaggregat 10 in die Arbeitsstellung bringen bzw. über einem im Schenkel 64 befestigten Mitnehmerstift 118, der in eine Vertiefung 116 ragt, die am vorderen Ende der Kolbenstange 112, 114 ausgebildet ist, wieder für eine deaktivierte Stellung zurückziehen.. An ihrem entgegengesetzten Ende ist jede Kolbenstange 112, 114 mit einem pneumatischen Antrieb 120 bzw. 122 verbunden, der in das hintere Ende der Achse 76 bzw. 78 eingeschraubt ist.

Die Achsen 76, 78 gehen zwischen den Lenkern 80, 82 und dem Schenkel 66 durch eine Anschlagplatte 124 hindurch. In der Anschlagplatte 124 ist zwischen den beiden Achsen eine Gewindeöffnung 126 ausgebildet, in die eine Verstellspindel 128 eingreift, die durch den Schenkel 66 hindurchgeht. Das hintere Ende der Verstellspindel 128 ist mit einem Zustellantrieb 132 verbunden.

Bei Betätigung der pneumatischen Antriebe 120, 122 werden die Kolbenstangen 112, 114 nach vorne bewegt, bis die Anschlagplatte 124 an den ersten Lenkern 80, 82 anliegt. Zur Einstellung der Position der Anschlagplatte 124 durch den Zustellantrieb 132 über die Spindel 128 kann somit der Verfahrweg der Kolbenstangen 112, 114 und somit der Verfahrweg der gesamten Fräskopfaufnahmeeinrichtung 30 in Z-Richtung zum Werkstück 1 eingestellt werden. Der Verfahrweg wird dabei so eingestellt, dass der Tastring 108 mit geeignetem Druck an der Kante 2 anliegt. Eine präzise Einstellung auf die Kantenstärke kann durch Verstellung der Anschlagplatte 124 erfolgen.

Die Feinverstellung der relativen Position des Messerkopfes 18 zu dem Tastring 108 in Z-Richtung erfolgt durch Betätigung des Spindelantriebes 74 über die in die Spindelmutter 72 eingreifende Verstellspindel 70, deren äußeres Ende mit dem Gewindemutterblock 68 auf der Führungsleiste 20 in Eingriff steht. Gleichzeitig kann die Fräsmotoreinrichtung 12 mit dem Messerkopf 18 in X-Richtung durch Betätigung des Verstellantriebes 56 fein eingestellt werden.

## Patentansprüche

1. Fräsaggregat zur Bearbeitung von Kanten (2) an Stirnseiten von plattenförmigen Werkstücken (1), mit
- einer Fräsmotoreinrichtung (12), an deren dem Werkstück (1) zugewandten Stirnende ein von der Fräsmotoreinrichtung (12) angetriebenes Fräswerkzeug (18) vorgesehen ist,
- einer Fräskopfaufnahmeeinrichtung (30), in der die Fräsmotoreinrichtung (12) durch einen ersten Verstellantrieb (74) senkrecht zur Kante (2) des Werkstücks (1) in einer ersten Verstellrichtung (Z) verschiebbar gelagert ist,
wobei
- die Fräsmotoreinrichtung (12) in der ersten Verstellrichtung (Z) durch eine Führungseinrichtung in der Fräskopfaufnahmeeinrichtung (30) verschiebbar geführt ist, **dadurch gekennzeichnet,**
- **dass** die Führungseinrichtung eine an der Fräsmotoreinrichtung (12) vorgesehene, sich in der ersten Verstellrichtung (Z) erstreckende und in einer Ausnehmung (28) der Fräskopfaufnahmeeinrichtung (30) mit seitlichem Spiel aufgenommene Führungsleiste (20) umfasst, die auf der der Fräsmotoreinrichtung (12) abgewandten Seite eine Gleitfläche (19) aufweist, die an einer Gegengleitfläche (29) der Ausnehmung (28) anliegt,
- **dass** in den beiden Längsseiten der Führungsleiste (20) jeweils eine sich in der ersten Verstellrichtung (Z) erstreckende Aussparung (21, 27) ausgebildet ist, die eine sich in der ersten Verstellrichtung (Z) erstreckende Seitenfläche (22, 23) aufweist, die von der Fräsmotoreinrichtung (12) weg nach außen geneigt ist,
- **dass** an einer ersten (22) der Seitenflächen (22, 23) eine entsprechend ausgebildete, in der ersten Verstellrichtung (Z) verlaufende innere Gleitfläche (37) einer Seitendruckleiste (43) und an der zweiten Seitenfläche (23) eine entsprechend ausgebildete, in der ersten Verstellrichtung (Z) verlaufende innere Gleitfläche (38) einer Gegendruckleiste (36) anliegt, wobei die Seitendruckleiste (43) und die Gegendruckleiste (36) in der Fräskopfaufnahmeeinrichtung (30) quer zur ersten Verstellrichtung (Z) in einer zweiten Verstellrichtung (X) verschiebbar gelagert sind,
- **dass** die Seitendruckleiste (43) eine äußere Gleitfläche (44) aufweist, die bezüglich der ersten Verstellrichtung (Z) geneigt ist,
- **dass** an der äußeren Gleitfläche (44) der Seitendruckleiste (43) eine innere Gleitfläche (48) eines in Verstellrichtung (Z) durch einen zweiten Verstellantrieb (56) verschiebbaren Schiebers (49) anliegt, der eine in der Verstellrichtung (Z) verlaufende äußere Gleitfläche (51) aufweist, die an einer in der ersten Verstellrichtung verlaufenden inneren Gleitfläche (46) anliegt, die in der Fräskopfaufnahmeeinrichtung (30) ausgebildet ist, und
- **dass** die Gegendruckleiste (36) in Richtung der Führungsleiste (20) vorgespannt ist.

2. Aggregat nach Anspruch 1, **dadurch gekennzeichnet, dass** die Gegendruckleiste (36) durch gefederte Druckelemente (40) vorgespannt ist, deren eines Ende an einer äußeren, in der ersten Verstellrichtung (Z) verlaufenden Seitenfläche (42) der Gegendruckleiste (36) anliegt und deren anderes Ende an der Fräskopfaufnahmeeinrichtung (30) befestigt ist.

3. Aggregat nach Anspruch 1, **dadurch gekennzeichnet, dass** zur Verstellung der Fräsmotoreinrichtung (30) in der ersten Verstellrichtung (Z) an der Führungsleiste (20) eine Gewindemuttereinrichtung (68) mit einem Innengewinde vorgesehen ist, in das ein mit einem ersten Außengewinde versehenes Ende einer Verstellspindel (70) eingreift, die außerdem ein zweites Außengewinde aufweist, das mit einem Innengewinde einer Spindelmutter (72) in Eingriff steht, welche an der Fräskopfaufnahmeeinrichtung (30) vorgesehen ist, wobei die Verstellspindel (70) von dem ersten Verstellantrieb (74) angetrieben wird.

4. Aggregat nach einem der vorhergehenden Ansprüche, **dadurch gekennzeichnet, dass** die Fräskopfaufnahmeeinrichtung (30) auf wenigstens einer Achse (76, 78) in der ersten Verstellrichtung (Z) mittels wenigstens eines Zustellantriebs (120, 122) verschiebbar ist.

5. Aggregat nach Anspruch 4, **dadurch gekennzeichnet, dass** die Fräskopfaufnahmeeinrichtung (30) auf zwei horizontal im Abstand zueinander angeordneten Achsen (76, 78) verschiebbar ist.

6. Aggregat nach Anspruch 5, **gekennzeichnet durch** zwei erste parallele Lenker (80, 82), die mit einem Ende jeweils an einer der Achsen (76, 78) angelenkt und mit ihrem anderen Ende an einem ersten Lagerelement (84) angelenkt sind, und **durch** zwei zweite parallele Lenker (86, 88), die im Abstand zueinander mit einem Ende an dem ersten Lagerelement (84) und mit dem anderen Ende an einem zweiten gestellfesten Lagerelement (90) angelenkt sind, das bezüglich des ersten Lagerelements (84) von der Fräskopfaufnahmeeinrichtung (30) abgewandt angeordnet ist.

7. Aggregat nach Anspruch 5 oder 6, **dadurch gekennzeichnet, dass** an der dem Werkstück (1) zugewandten Seite der Fräskopfaufnahmeeinrichtung (30) eine Aufnahmeplatte (104) angeordnet ist, an der eine Tasteinrichtung mit Tastrolle (110) und Tastring (108) angebracht ist, wobei die Aufnahmeplatte (104) parallel zur Stirnseite des Werkstücks (1) relativ zu der Fräskopfaufnahmeeinrichtung (30) einstellbar ist.

8. Aggregat nach einem der Ansprüche 4 bis 7, **dadurch gekennzeichnet, dass** der wenigstens eine Zustellantrieb (120, 122) mit dem von dem Werkstück (1) abgewandten Ende der wenigstens einen Achse(76, 78) verbunden ist und einen in der ersten Verstellrichtung (Z) hin- und herbewegbaren Kolben (112, 114) aufweist, der sich durch die Achse (76, 78) erstreckt und mit der Fräskopfaufnahmeeinrichtung (30) verbunden ist.

9. Aggregat nach einem der Ansprüche 6 bis 8, **dadurch gekennzeichnet, dass** zur Anpassung auf die Kantenstärke ein Anschlagelement (124) auf den beiden Achsen (76, 78) verschiebbar angeordnet ist, das bezüglich der Fräskopfaufnahmeeinrichtung (30) in der ersten Verstellrichtung (Z) durch einen Einstellantrieb (132) einstellbar ist.

## Claims

1. Milling unit for machining edges (2) at front faces of plate-shaped workpieces (1), with
- a milling motor device (12), at whose front end which faces the workpiece (1) a milling tool (18), which is driven by the milling motor device (12), is provided,
- a milling head holding device (30) in which the milling motor device (12) is mounted such that it can be displaced by a first displacement drive (74) perpendicularly to the edge (2) of the workpiece (1) in a first displacement direction (Z),
wherein
- the milling motor device (12) is guided such that it can be displaced in the first displacement direction (Z) by a guide device in the milling head holding device (30),
**characterised in**
- **that** the guide device comprises a guide gib (20) which is provided at the milling motor device (12), extends in the first displacement direction (Z), is held with lateral play in a recess (28) of the milling head holding device (30) and has a slide face (19) on the side which is remote from the milling motor device (12), which slide face lies against a mating slide face (29) of the recess (28),
- **that** a respective clearance (21, 27) extending in the first displacement direction (Z) is formed in the two longitudinal sides of the guide gib (20), which clearance has a lateral face (22, 23) which extends in the first displacement direction (Z) and is inclined outwards away from the milling motor device (12),
- **that** a correspondingly formed inner slide face (37), which extends in the first displacement direction (Z), of a lateral pressure gib (43) lies against a first (22) of the lateral faces (22, 23), and a correspondingly formed inner slide face (38), which extends in the first displacement direction (Z), of a mating pressure gib (36) lies against the second lateral face (23), wherein the lateral pressure gib (43) and the mating pressure gib (36) are mounted such that they can be displaced in the milling head holding device (30) transversely to the first displacement direction (Z) in a second displacement direction (X),
- **that** the lateral pressure gib (43) has an outer slide face (44) which is inclined relative to the first displacement direction (Z),
- **that** an inner slide face (48) of a slide (49), which can be displaced in the displacement direction (Z) by a second displacement drive (56), lies against the outer slide face (44) of the lateral pressure gib (43), which slide has an outer slide face (51) which extends in the displacement direction (Z) and lies against an inner slide face (46) which extends in the first displacement direction and is formed in the milling head holding device (30), and
- **that** the mating pressure gib (36) is biased in the direction of the guide gib (20).

2. Unit according to Claim 1, **characterised in that** the mating pressure gib (36) is biased by spring-loaded pressure elements (40), one end of which lies against an outer lateral face (42), which extends in the first displacement direction (Z), of the mating pressure gib (36) and the other end of which is fastened to the milling head holding device (30).

3. Unit according to Claim 1, **characterised in that**, in order to displace the milling motor device (30) in the first displacement direction (Z), a threaded nut device (68) with an internal thread is provided at the guide gib (20), with which thread an end, provided with a first external thread, of a displacement spindle (70) meshes, which spindle also has a second external thread which meshes with an internal thread of a spindle nut (72) which is provided at the milling head holding device (30), wherein the displacement spindle (70) is driven by the first displacement drive (74).

4. Unit according to any one of the preceding Claims, **characterised in that** the milling head holding device (30) can be displaced on at least one shaft (76, 78) in the first displacement direction (Z) by means of at least one feed drive (120, 122).

5. Unit according to Claim 4, **characterised in that** the milling head holding device (30) can be displaced on two shafts (76, 78) disposed horizontally at a spacing from one another.

6. Unit according to Claim 5, **characterised by** two first parallel links (80, 82) which are in each case articulated by way of one end to one of the shafts (76, 78) and by way of their other end to a first bearing element (84), and by two second parallel links (86, 88) which are articulated at a spacing from one another by way of one end to the first bearing element (84) and by way of the other end to a second stationary bearing element (90) which is disposed remotely from the milling head holding device (30) relative to the first bearing element (84).

7. Unit according to Claim 5 or 6, **characterised in that** a holding plate (104) is disposed on the side of the milling head holding device (30) which faces the workpiece (1), to which plate a sensing device with a sensing roller (110) and a sensing ring (108) is fitted, wherein the holding plate (104) can be adjusted parallel to the front face of the workpiece (1) relative to the milling head holding device (30).

8. Unit according to any one of Claims 4 to 7, **characterised in that** the at least one feed drive (120, 122) is connected to the end of the at least one shaft (76, 78) which is remote from the workpiece (1) and has a piston (112, 114) which can reciprocate in the first displacement direction (Z), extends through the shaft (76, 78) and is connected to the milling head holding device (30).

9. Unit according to any one of Claims 6 to 8, **characterised in that**, in order to adapt to the edge thickness, a stop element (124) is disposed in a displaceable manner on the two shafts (76, 78), which element can be adjusted relative to the milling head holding device (30) in the first displacement direction (Z) by an adjusting drive (132).

## Revendications

1. Ensemble de fraisage pour l'usinage d'arêtes (2) sur des côtés avant de pièces (1) en forme de plaque, comprenant,
- un dispositif moteur de fraisage (12), sur l'extrémité avant duquel, tourné vers la pièce (1), il est prévu un outil de fraisage (18) entraîné par le dispositif moteur de fraisage (12),
- un dispositif de réception de tête de fraisage (30), dans lequel le dispositif moteur de fraisage (12) est logé de façon à pouvoir coulisser au moyen d'un premier entraînement de déplacement (74) perpendiculairement à l'arête (2) de la pièce (1) dans un premier sens de déplacement (Z),
- le dispositif moteur de fraisage (12) étant guidé de façon coulissante dans le premier sens de déplacement (Z) par un système de guidage dans le dispositif de réception de tête de fraisage (30), **caractérisé en ce que**
- le système de guidage comprend une baguette de guidage (20) prévue sur le dispositif moteur de fraisage (12), s'étendant dans la première direction de déplacement (Z) et réceptionnée avec du jeu latéral dans un évidement (28) du dispositif de logement de tête de fraisage (30), laquelle baguette présente sur le côté opposé au dispositif moteur de fraisage (12) une surface de glissement (19) qui s'appuie sur une surface de contre-glissement (29) de l'évidement (28),
- **en ce que** dans chacun des deux grands côtés de la baguette de guidage (20) est réalisé un évidement (21, 27) s'étendant dans la première direction de déplacement (Z), qui présente une face latérale (22, 23) s'étendant dans la première direction de déplacement (Z), laquelle surface est inclinée à partir du dispositif moteur de fraisage (12) vers l'extérieur,
- **en ce que** sur la première (22) des faces latérales (22, 23) s'appuie une surface de glissement (37) intérieure, réalisée en conséquence et agencée dans la première direction de déplacement (Z), d'une baguette de pression latérale (43) et sur la seconde face latérale (23) une surface de glissement (38) intérieure, conçue en conséquence et agencée dans la première direction de déplacement (Z), d'une contre-baguette de pression , (36), la baguette de pression latérale (43) et la baguette de contre-pression (36) étant logées dans le dispositif de réception de tête de fraisage (30), de façon à pouvoir coulisser transversalement à la première direction de déplacement (Z) dans une seconde direction de déplacement (X),
- **en ce que** la baguette de pression latérale (43) présente une surface de glissement (44) extérieure qui est inclinée par rapport à la première direction de déplacement (Z),
- **en ce que** sur la surface de glissement (44) extérieure de la baguette de pression latérale (43) s'appuie une surface de glissement (48) intérieure d'un coulisseau (49) pouvant être déplacé dans le sens de déplacement (Z) par un second entraînement de déplacement (56), lequel coulisseau présente une surface de glissement (51) extérieure, agencée dans le sens de déplacement (Z), qui s'appuie sur une surface de glissement (46) intérieure, agencée dans la première direction de déplacement, laquelle surface est conçue dans le dispositif de réception de tête de fraisage (30) et
- **en ce que** la baguette de contre-pression (36) est pré-tendue en direction de la baguette de guidage (20).

2. Ensemble selon la revendication 1, **caractérisé en ce que** la baguette de contre-pression (36) est précontrainte par des éléments de pression (40) montés sur ressort, dont une extrémité s'appuie sur une face latérale (42) extérieure, agencée dans le premier sens de déplacement (Z), de la baguette de contre-pression (36) et dont l'autre extrémité est fixée sur le dispositif de réception de tête de fraisage.

3. Ensemble selon la revendication 1, **caractérisé en ce que**, pour le déplacement du dispositif de moteur de fraisage (30) dans le premier sens de déplacement (Z), il est prévu sur la baguette de guidage (20) un dispositif d'écrou fileté (68) avec un filetage intérieur dans lequel s'engage une extrémité, dotée d'un premier filetage extérieur, d'une broche de réglage (70), qui présente d'autre part un second filetage extérieur, qui est en prise avec un filetage intérieur d'un écrou de broche (72), qui est prévu sur le dispositif de réception de tête de fraisage (30), la broche de réglage (70) étant entraînée par le premier entraînement de déplacement (74).

4. Ensemble selon l'une quelconque des revendications précédentes, **caractérisé en ce que** le dispositif de réception de tête de fraisage (30) peut coulisser sur au moins un axe (76, 78) dans le premier sens de déplacement (Z) au moyen d'au moins un entraînement d'avance (120, 122).

5. Ensemble selon la revendication 4, **caractérisé en ce que** le dispositif de réception de tête de fraisage (30) peut coulisser sur deux axes (76, 78) disposés horizontalement à distance l'un de l'autre.

6. Ensemble selon la revendication 5, **caractérisé par** deux bras oscillants (80, 82) parallèles, qui sont articulés chacun par une extrémité sur l'un des axes (76, 78) et sont articulés par leur autre extrémité sur un premier élément de palier (84), et par deux bras oscillants (86, 88) parallèles, qui sont articulés à distance l'un et l'autre par une extrémité sur le premier élément de palier (84) et par l'autre extrémité sur un second élément de palier (90) solidaire du bâti, qui est disposé par rapport au premier élément de palier (84) à l'opposé du dispositif de réception de tête de fraisage (30).

7. Ensemble selon la revendication 5 ou 6, **caractérisé en ce que** sur le côté, tourné vers la pièce (1), du dispositif de réception de tête de fraisage (30) est disposé une plaque de réception (104), sur laquelle est placée un dispositif palpeur avec galet palpeur (110) et bague palpeur (108), la plaque de réception (104) étant réglable parallèlement au côté avant de la pièce (1) par rapport au dispositif de réception de tête de fraisage (30).

8. Ensemble selon l'une quelconque des revendications 4 à 7, **caractérisé en ce que** l'au moins un entraînement d'avance (120, 122) est relié par l'extrémité, opposée à la pièce (1), du au moins un axe (76, 78) et présente un piston (112, 114) pouvant être déplacé d'un côté et de l'autre dans la première direction de déplacement (Z), qui s'étend à travers l'axe (76, 78) et est relié au dispositif de réception de tête de fraisage (30).

9. Ensemble selon l'une quelconque des revendications 6 à 8, **caractérisé en ce que**, pour l'adaptation à l'épaisseur d'arête, un élément de butée (124) est disposé de façon à pouvoir coulisser sur les deux axes (76, 78), lequel peut être réglé par rapport au dispositif de réception de tête de fraisage (30) dans la première direction de déplacement (Z) par un entraînement de réglage (132)..
